# EUROPÄISCHE PATENTSCHRIFT

(11) **EP 2 574 645 B1**
(45) Veröffentlichungstag und Bekanntmachung des Hinweises auf die Patenterteilung: **25.06.2014**
(21) Anmeldenummer: 11183634.2
(22) Anmeldetag: 30.09.2011
(51) Int. Cl.: C09D 11/00, B41M 5/40, B41M 5/42, B41M 5/333, B41M 5/327, B41M 5/52

(54) **Mit einem Farbstoffvorläufer farbbildend reagierender Farbakzeptor und wärmeempfindliches Aufzeichnungsmaterial mit einem solchen Farbakzeptor**
Dye acceptor which reacts with a dye precursor to form a colour and heat-sensitive recording material with such a dye acceptor
Accepteur de couleur réagissant en formant des couleurs avec un précurseur de colorant et matériau d'enregistrement sensible à la chaleur doté d'un tel accepteur de couleur

(43) Veröffentlichungstag der Anmeldung: 03.04.2013
(73) Patentinhaber: Mitsubishi HiTec Paper Europe GmbH, 33699 Bielefeld (DE)
(72) Erfinder: Neukirch, Matthias, 24943 Flensburg (DE)
(74) Vertreter: Hiller, Volker

(56) Entgegenhaltungen:
- EP-A1- 2 033 801
- EP-A1- 2 033 802
- DE-A1- 2 253 772
- US-A1- 2004 258 857
- US-A1- 2005 112 302
- US-A1- 2005 282 704

## Beschreibung

Die Erfindung betrifft zunächst einen neuartigen Farbakzeptor, welcher in der Lage ist, mit einem Farbstoffvorläufer farbbildend miteinander zu reagieren. Die Erfindung betrifft genauso ein wärmeempfindliches Aufzeichnungsmaterial mit einem Substrat und einer darauf ausgebildeten wärmeempfindlichen Aufzeichnungsschicht, wobei diese Aufzeichnungsschicht den neuartigen Farbakzeptor enthält.

Wärmeempfindliche Aufzeichnungsmaterialien sind seit vielen Jahren bekannt und erfreuen sich einer im Grundsatz ungebrochenen Beliebtheit, was unter anderem darauf zurückzuführen ist, dass ihre Verwendung für den Ticket und/oder Kaufbeleg ausgebenden Geschäftsmann mit großen Vorteilen verbunden ist. Weil die farbbildenden Komponenten bei dem wärmeempfindlichen Aufzeichnungsverfahren in dem Aufzeichnungsmaterial selbst stecken, können die Toner- und Farbkartuschen-freien Thermodrucker, die in ihrer Funktion von niemandem mehr regelmäßig kontrolliert werden müssen, in großer Zahl aufgestellt werden. So hat sich diese innovative Technologie insbesondere im öffentlichen Personenverkehr und im Einzelhandel weitgehend flächendeckend durchgesetzt.

In der zurückliegenden näheren Vergangenheit sind jedoch vermehrt Bedenken gegen die Umweltverträglichkeit bestimmter Farbakzeptoren aufgekommen, die zwar einerseits keineswegs naturwissenschaftlich begründet sind, andererseits jedoch von der Industrie und insbesondere vom Handel nicht außer Acht gelassen werden können. So sind insbesondere
- Bisphenol-A, das ist 2,2 bis (4-hydroxyphenyl)-Propan, und
- Bisphenol-S, das ist 4,4'-Dihydroxydiphenylsulfon,
enthaltende wärmeempfindliche Aufzeichnungsmaterialien in der Kritik, was in erster Linie zu einem verstärkten Einsatz von
- Pergafast^{®} 201, das ist N-(p-toluensulphonyl)-N'-3-(p-toluensulphonyl-Oxyphenyl)-harnstoff, der Firma BASF Corporation, und
- D8, das ist 4-[(4-(1-methylethoxy)phenyl)sulfonyl]phenol,
führte. In Berücksichtigung dieser in kürzester Zeit völlig veränderten Marktlage erkannte der Erfinder die Notwendigkeit nach einem neuartigen Farbakzeptor, der einerseits möglichst vollständig biologisch abbaubar und die Umwelt nicht belastend ist und der andererseits wirtschaftlich zumindest noch vertretbar zu sein hat, denn schließlich müssen auch die besten Produkte bezahlbar bleiben und für den Benutzer bezahlbar sein.

Als in diesem Zusammenhang zu berücksichtigender Stand der Technik sind insbesondere und zunächst die beiden europäischen Patentanmeldungen EP 2 033 801 A1 und EP 2 033 802 A1 zu nennen, aus denen jeweils ein wärmeempfindliches Aufzeichnungsmaterial bekannt ist, dessen wärmeempfindliche Aufzeichnungsschicht unter anderem N-(p-toluensulphonyl)-N'-3-(p-toluensulphonyl-Oxy-phenyl)-harnstoff enthält.

Die US 2004 / 258,857 A1 schlägt dann ein nicht reaktives Aufzeichnungsmaterial vor, dessen elastisches Substrat Polymilchsäure enthält. Aus der US 2005 / 112,302 A1 wiederum ist ein Tintenstrahlaufzeichnungselement bekannt, dessen eine Tinten-durchlässige Beschichtung ein Polymilchsäure basierendes Material enthält.

Aus der US 2005 282,704 A1 ist der Hinweis auf die mögliche Verwendung von Copolymeren der Polymilchsäure als Energieabsorber in wärmeempfindlichen Aufzeichnungsmaterialien zu entnehmen. Die deutsche Offenlegungsschrift DE 22 53 772 A1 schlägt schließlich einen Aufzeichnungsbogen mit einer Farbentwicklerschicht vor, die neben einem sauren Polymer ein Metallsalz oder eine organische Carbonsäure, beispielsweise eine aliphatische Carbonsäure, hier unter anderem genannt die 2-Hydroxy-2,4-dimethylpentansäure, enthält.

Die Lösung der vorstehend genannten Aufgabe geschieht unter Berücksichtigung und Würdigung des zuvor wiedergegebenen Standes der Technik mittels eines neuartigen Farbakzeptors zur chemischen Reaktion mit einem Farbstoffvorläufer unter Ausbildung einer visuell erkennbaren Farbe, wobei der Farbakzeptor dadurch gekennzeichnet ist, dass er Oligomere der Polymilchsäure enthält oder durch diese gebildet ist.

Polymilchsäure zeichnet sich dadurch aus, dass sie ein vollständig biologisch abbaubarer Kunststoff als spezifische Ausführungsform des Polyesters ist, was insbesondere gilt, wenn es sich bei der Polymilchsäure um eine Verbindung aus rechtsdrehenden Milchsäuren (L+Milchsäure) handelt, was im Sinne der vorliegenden Erfindung als ganz besonders bevorzugt gilt. Da Polymilchsäure jeweils eine nicht nutzbare Hydroxylgruppe und auch nur eine mit den Farbvorstoffvorläufern als reaktiv anzusehende Carboxylgruppe an den beiden Enden der langen Polymermoleküle enthält, stellt es eine bevorzugte Ausführungsform der Erfindung dar, wenn Oligomere als kurzkettige Polymere der Polymilchsäure als Farbakzeptor oder als Teil des Farbakzeptors eingesetzt werden. Dabei sind die Oligomere der Polymilchsäure darstellbar entsprechend Formel 1:

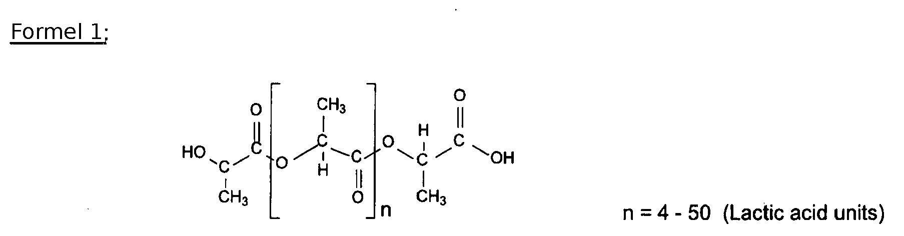

Nach intensiven dieser Erfindung zugrundeliegenden Untersuchungen erkannte der Erfinder, dass es vorteilhaft ist, die Anzahl der nutzbaren Carboxylgruppen zu erhöhen, indem die Oligomere der Polymilchsäure n-fach um eine n-wertige Säure gruppiert werden, was als besonders bevorzugte Ausführung der vorliegenden Erfindung anzusehen ist.

Als Beispiele für die besonders bevorzugten zweiwertigen Säuren gelten Säuren, ausgesucht aus der Liste, umfassend:
Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Tridecandisäure, Tetradecandisäure, Hexadecandisäure.

Darstellbar ist ein solches Molekül dann entsprechend Formel 2:

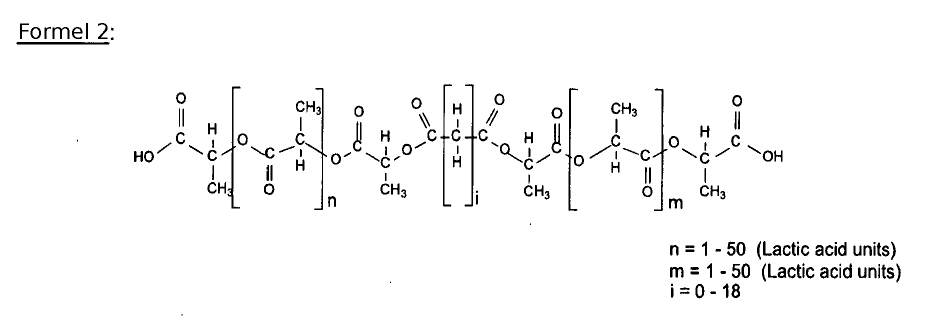

Weitere Beispiele für eine zweiwertige Säure sind solche Säuren, ausgesucht aus der Liste, umfassend:
Maleinsäure, Fumarsäure, Apfelsäure, Weinsäure, Glutaminsäure, Asparaginsäure, Phthalsäure, Isophthalsäure, Terepthalsäure.

Ganz besonders bevorzugtes Beispiel für eine im Sinne der vorliegenden Erfindung sehr gut zu nutzende zweiwertige Säure ist die Oxalsäure, was zu einem Molekül als Farbakzeptor aus einem zentralen Oxalsäuremolekül und zwei Oligomeren der Polymilchsäure führt. Ein solches Molekül gilt als ganz besonders bevorzugtes Beispiel für einen erfindungsgemäßen Farbakzeptor, welcher in der Lage ist, mit einem Farbstoffvorläufer unter Ausbildung einer visuell erkennbaren Farbe zu reagieren.

Im Sinne der vorliegenden Erfindung gilt es ferner als ganz besonders bevorzugt, die Oligomere der Polymilchsäure dreifach um eine dreiwertige Säure zu gruppieren, wozu sich insbesondere die Zitronensäure anbietet, was zu einem Molekül als Farbakzeptor aus einem zentralen Zitronensäuremolekül und drei Oligomeren der Polymilchsäure führt. Ein solches Molekül gilt als ganz besonders bevorzugtes Beispiel für einen erfindungsgemäßen Farbakzeptor, welcher in der Lage ist, mit einem Farbstoffvorläufer farbbildend miteinander zu reagieren. Darstellbar ist ein solches Molekül entsprechend Formel 3:

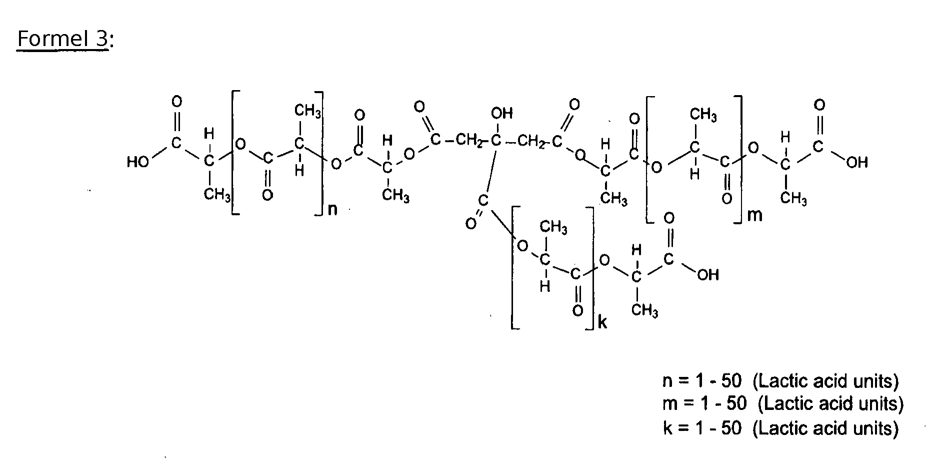

Die Erfindung betrifft genauso ein farbreaktives Aufzeichnungsmaterial mit einem Substrat und einer darauf ausgebildeten farbreaktiven Aufzeichnungsschicht, wobei diese Aufzeichnungsschicht den neuartigen Farbakzeptor enthält. Als farbreaktives Aufzeichnungsmaterial gilt zunächst ein druckempfindliches Aufzeichnungsmaterial als bevorzugt, das
- zum einen mindestens einen Farbstoffvorläufer und
- zum anderen mindestens einen Farbakzeptor in einer der vorstehend genannten Ausführungsformen
entweder in einer einzigen oder in zwei separaten Schichten enthält. Dabei kann insbesondere entweder der mindestens eine Farbstoffvorläufer und/oder mindestens der eine Farbakzeptor gemäß der hier vorgeschlagenen Ausführungsformen eingekapselt sein.

Als farbreaktives Aufzeichnungsmaterial gilt ferner ein wärmeempfindliches Aufzeichnungsmaterial als ganz besonders bevorzugt. Ein solches wärmeempfindliches Aufzeichnungsmaterial sieht in seiner einfachsten Ausführungsform ein Substrat und eine wärmeempfindliche Aufzeichnungsschicht vor, wobei die wärmeempfindliche Aufzeichnungsschicht mindestens einem Farbstoffvorläufer und mindestens einem Farbakzeptor enthält, welche unter Einwirkung von Wärme farbbildend miteinander reagieren.

Unter Nutzung der vorstehend gemachten Überlegungen sieht die Erfindung vor, wenn der Farbakzeptor ein Molekül aus einer n-wertigen Säure und aus n-fach um diese Säure gruppierte Oligomere der Polymilchsäure
enthält oder durch dieses Molekül gebildet ist. Ein derartiger Farbakzeptor ist erfindungsgemäß in der Lage, mit einem Farbstoffvorläufer unter Ausbildung einer visuell erkennbaren Farbe zu reagieren.

In einer ganz besonders bevorzugten Ausführungsform enthält die wärmeempfindliche Aufzeichnungsschicht mindestens einen Farbstoffvorläufer und eine Kombination aus mindestens zwei verschiedenen Farbakzeptoren, wobei jeder der beiden verschiedenen Farbakzeptoren ein Molekül aus
einer n-wertigen Säure und aus n-fach um diese Säure gruppierte Oligomere der Polymilchsäure
enthält oder durch dieses Molekül gebildet ist.

Ganz besonders bevorzugt ist dabei die Kombination
- aus mindestens einem ersten Farbakzeptor, enthaltend ein Molekül oder gebildet aus einem Molekül aus
   einer n-wertigen Säure und aus n-fach um diese Säure gruppierte Oligomere der Polymilchsäure
- und aus mindestens einem zweiten Farbakzeptor, enthaltend ein Molekül oder gebildet aus einem Molekül aus
   einer m-wertigen Säure und aus m-fach um diese Säure gruppierte Oligomere der Polymilchsäure
mit der Bedingung m ≠ n. In einem solchen bevorzugten Fall können rheologische Faktoren der Beschichtungsmasse zur Ausbildung der wärmeempfindlichen Aufzeichnungsschicht und deren Empfindlichkeit gegenüber der farbauslösenden Wärme gezielt eingestellt werden.

Es ist möglich, dass die wärmeempfindliche Aufzeichnungsschicht neben dem mindestens einen Farbakzeptor in einer der hier vorgeschlagenen Ausführungsformen, nach denen er durch Milchsäuremonomere aufgebaut ist, weitere Farbakzeptoren aufweist, die dann insbesondere ausgesucht sind, aus der Liste, umfassend:
- Bisphenol-A, das ist 2,2 bis (4-hydroxyphenyl)-Propan,
- Bisphenol-S, das ist 4,4'-Dihydroxydiphenylsulfon,
- Pergafast® 201, das ist N-(p-toluensulphonyl)-N'-3-(p-toluensulphonyl-Oxyphenyl)-harnstoff, der Firma BASF Corporation,
- D8, das ist 4-[(4-(1-methylethoxy)phenyl)sulfonyl]phenol,
jedoch gilt es als ganz besonders bevorzugt, wenn die wärmeempfindliche Aufzeichnungsschicht des hier vorgeschlagenen wärmeempfindlichen Aufzeichnungsmaterials ausschließlich einen Farbakzeptor oder eine Kombination mehrerer ausschließlich solcher Farbakzeptoren aufweist, wie sie hier entsprechend den vorstehenden Vorgaben für eine der hier vorgeschlagenen Ausführungsformen vorgeschlagen werden, also insbesondere auch solche, die ein Molekül aus einer n-wertigen Säure und aus n-fach um diese Säure gruppierte Oligomere der Polymilchsäure enthalten oder durch dieses Molekül gebildet sind.

Das hier vorgeschlagene wärmeempfindliche Aufzeichnungsmaterial weist als mögliche Farbstoffvorläufer in der wärmeempfindlichen Aufzeichnungsschicht bevorzugt mindestens eine Substanz aus, die ausgesucht ist aus der Liste, umfassend: 3-diethylamino-6-methyl-7-Anilinofluoran, 3-dibutylamino-6-methyl-7-Anilinofluoran, 3-(N-methyl-N-propyl)amino-6-methyl-7-Anilinofluoran, 3-(N-ethyl-N-isoamyl)amino-6-methyl-7-Anilinofluoran, 3-(N-methyl-N-cyclohexyl)amino-6-methyl-7-Anilinofluoran, 3-(N-ethyl-N-tolyl)amino-6-methyl-7-Anilinofluoran und 3-(N-ethyl-N-tetrahydrofuryl)amino-6-methyl-7-Anilinofluoran. Ganz besonders bevorzugt ist dabei 3-dibutylamino-6-methyl-7-Anilinofluoran - auch bekannt als ODB-2.

Das erfindungsgemäße Aufzeichnungsmaterial kann jedoch in der wärmeempfindlichen Aufzeichnungsschicht neben diesen als Farbstoffvorläufer angegebenen Substanzen weiterhin auch eine oder mehrere der folgenden, im nahen InfrarotBereich absorbierenden Verbindungen enthalten:

3,6-Bis(dimethylamino)fluoren-9-spiro-3'-(6'-dimethylaminophthalid), 3-Diethylamino-6-dimethylaminofluoren-9-spiro-3'-(6'-dimethylaminophthalid), 3,6-Bis(diethylamino)-fluoren-9-spiro-3'-(6'-dimethylaminophthalid), 3-Dibutylamino-6-dimethylaminofluoren-9-spiro-3'-(6'-dimethylaminophthalid), 3-Dibutylamino-6-diethylaminofluoren-9-spiro-3'-(6'-dimethylaminophthalid), 3,6-Bis(dimethylamino)fluoren-9-spiro-3'-(6'-diethylamino-phthalid), 3-Diethylamino-6-dimethylaminofluoren-9-spiro-3'-(6'-diethylaminophthalid), 3-Dibutylamino-6-dimethylaminofluoren-9-spiro-3'-(6'-diethylaminophthalid), 3,6-Bis-(diethylamino)fluoren-9-spiro-3'-(6'-diethylaminophthalid), 3,6-Bis-(dimethylamino)-fluoren-9-spiro-3'-(6'-dibutylaminophthalid), 3-Dibutylamino-6-di-ethylaminofluoren-9-spiro-3'-(6'-diethylaminophthalid), 3-Diethylamino-6-dimethylaminofluoren-9-spiro-3'-(6'-dibutylaminophthalid), 3,3-Bis[2-(4-dimethylamino-phenyl)-2-(4-methoxyphenyl)-ethenyl]-4,5,6,7-tetrachlorophthalid.

Die Aufzeichnungsschicht des erfindungsgemäßen wärmeempfindlichen Aufzeichnungsmaterials kann zur Erhöhung der thermischen Ansprechempfindlichkeit bevorzugt auch enthalten. Derartige Sensibilisatoren sind beispielsweise: 2-(2H-benzotriazol-2-yl)-p-cresol, Benzyl-p-benzyloxy-benzoat, Methylolstearamid, Stearinsäureamid, p-Benzylbiphenyl, 1,2-Di(phenoxy)-ethan, 1,2-Di(m-methylphenoxy)ethan, m-Terphenyl, Dibenzyloxalat, Benzylnaphthylether, Dimethylterephtalat und Diphenylsulfon, wobei Methylolstearamid, und insbesondere Stearinsäureamid und Dimethylterephtalat als ganz bevorzugt gelten.

Geeignete Bindemittel zur Einbindung in die wärmeempfindliche Aufzeichnungsschicht sind beispielsweise wasserlösliche Bindemittel wie Stärke, Hydroxyethylzellulose, Methylzellulose, Carboxymethylzellulose, Gelatine, Kasein, Polyvinylalkohole, modifizierte Polyvinylalkohole, Ethylen-Vinylalkohol-Coplymere, Natriumpolyacrylate, Acrylamid-Acrylat-Copolymere, Acrylamid-Acrylat-Methacrylat-Terpolymere sowie Alkalisalze von Styrol-Maleinsäureanhydrid-Copolymer oder Ethylen-Maleinsäureanhydrid-Copolymer, wobei die Bindemittel allein oder in Kombination untereinander eingesetzt werden können; auch wasserunlösliche Latexbinder wie Styrol-Butadiene-Copolymere, Acrylnitril-Butadien-Copolymere und Methyl-Acrylat-Butadien-Copolymere bieten sich als Bindemittel zur Einbindung in die wärmeempfindliche Aufzeichnungsschicht an. Im Sinne der vorliegenden Erfindung gelten Polyvinylalkohol, Ethylen-Vinylalkohol-Coplymere oder Polyvinylalkohol in Verbindung mit Ethylen-Vinylalkohol-Coplymeren als besonders bevorzugte Bindemittel, die zusammen, bezogen auf das Gesamtgewicht der Aufzeichnungsschicht, in einem Bereich von 10 bis 20 Gew.-% in die wärmeempfindliche Aufzeichnungsschicht eingebunden sind.

Zur Verbesserung der Gleiteigenschaften an einem Thermokopf und zur Vermeidung einer übermäßigen Abnutzung des Thermokopfes kann die wärmeempfindliche Aufzeichnungsschicht weiterhin Gleit- und Trennmittel enthalten wie Metallsalze höherer Fettsäuren, zum Beispiel Zinkstearat, Kalziumstearat sowie Wachse, wie zum Beispiel Paraffin, oxidiertes Paraffin, Polyethylen, Polyethylenoxid, Stearamide und Kastorwachs. Weitere Bestandteile der Aufzeichnungsschicht sind gegebenenfalls beispielsweise Pigmente, bevorzugt anorganische Pigmente wie beispielsweise Aluminium(hydr)oxid, Kieselsäure und Kalziumkarbonat, wobei hier insbesondere Kalziumkarbonat, das bevorzugt in einer Menge von 0 bis 45 Gew.-%, ganz besonders bevorzugt in einer Menge von 10 bis 40 Gew.-%, jeweils bezogen auf das Gesamtgewicht der Aufzeichnungsschicht, in die Aufzeichnungsschicht eingebunden sein soll, als bevorzugt gilt.

Als Beschichtungsvorrichtung zum Auftrag der wärmeempfindlichen Aufzeichnungsschicht bieten sich insbesondere Rollrakelstreichwerk, Messerstreichwerk, Vorhangbeschichter oder Luftbürste an. Die flächenbezogene Masse der wärmeempfindlichen Aufzeichnungsschicht liegt dabei bevorzugt zwischen 2 und 6 g/m² und noch besser zwischen 2,2 und 4,8 g/m².

In einer ganz besonders bevorzugten Ausführungsform weist das erfindungsgemäße wärmeempfindliche Aufzeichnungsmaterial eine pigmenthaltige Zwischenschicht auf, welche zwischen Substrat und wärmeempfindlicher Aufzeichnungsschicht angeordnet ist.

Als Pigmente der Zwischenschicht bieten sich sowohl organische Hohlraum-Pigmente wie auch anorganische Pigmente an, letztere bevorzugt ausgewählt aus der Gruppe, umfassend natürliches wie kalziniertes Kaolin, Siliziumoxid und hier besonders Bentonit, Kalziumkarbonat sowie Aluminiumhydroxid und hier besonders Böhmit. Eine solche Zwischenschicht kann zum einen einen positiven Beitrag zur Egalisierung der zu beschichtenden Oberfläche leisten, womit sich die Menge an notwendigerweise aufzubringender Streichfarbe für die wärmeempfindliche Aufzeichnungsschicht reduziert. Aus diesem Grund bieten sich zum Auftrag der pigmenthaltigen Zwischenschicht egalisierende Streichwerke an, wie beispielsweise Walzenstreichwerke, Streichmesser- und (Roll-)Rakelstreichwerke. Zum anderen können die Pigmente dieser Zwischenschicht die durch Hitzeeinwirkung verflüssigten Wachsbestandteile der wärmeempfindlichen Aufzeichnungsschicht bei der Schriftbildausbildung aufnehmen und begünstigen so eine sichere und schnelle Funktionsweise der wärmeinduzierten Aufzeichnung. Die flächenbezogene Masse der pigmenthaltigen Zwischenschicht liegt bevorzugt zwischen 5 und 20 g/m² und noch besser zwischen 7 und 11 g/m².

Das erfindungsgemäße Aufzeichnungsmaterial kann ferner eine Schutzschicht aufweisen, die auf die wärmeempfindliche Aufzeichnungsschicht aufgetragen ist und diese ganz oder teilweise abdeckt. Die Schutzschicht kann dabei insbesondere einen Schutz der unter ihr angeordneten Aufzeichnungsschicht vor organischen Lösungsmitteln wie auch vor Ölen, Fetten, Wasser und Weichmacher gewährleisten.

Auch wenn nicht auf Papier als Substrat beschränkt, ist Papier und hier speziell ein nicht oberflächenbehandeltes Streichrohpapier das Substrat, das sich am Markt auch mit Blick auf die gute Umweltverträglichkeit wegen der guten Recyclingfähigkeit durchgesetzt hat und das im Sinne der Erfindung bevorzugt ist. Unter einem nicht oberflächenbehandelten Streichrohpapier ist ein nicht in einer Leimpresse oder in einer Beschichtungsvorrichtung behandeltes Streichrohpapier zu verstehen. Für die Erfindung sind im gleichen Maße Folien beispielsweise aus Polypropylen, Polyolefin und mit Polyolefin beschichtete Papiere als Substrat möglich, ohne dass eine solche Ausführung ausschließenden Charakter aufweist.

Die in der Beschreibung und in den Ansprüchen gemachten Angaben zur flächenbezogenen Masse, zu Gew.-% (Gewichts-%) beziehen sich jeweils auf das "atro"-Gewicht, d.h. absolut trockene Gewichtsteile.

## Patentansprüche

1. Farbakzeptor zur chemischen Reaktion mit einem Farbstoffvorläufer unter Ausbildung einer visuell erkennbaren Farbe, **dadurch gekennzeichnet, dass** der Farbakzeptor Oligomere der Polymilchsäure enthält oder durch diese gebildet ist.

2. Farbakzeptor nach Anspruch 1, **dadurch gekennzeichnet, dass** der Farbakzeptor ein Molekül aus
einer n-wertigen Säure und aus n-fach um diese Säure gruppierte Oligomere der Polymilchsäure
enthält oder durch dieses Molekül gebildet ist.

3. Farbakzeptor nach Anspruch 2, **dadurch gekennzeichnet, dass** der Farbakzeptor ein Molekül aus einem zentralen Oxalsäuremolekül und zwei Oligomeren der Polymilchsäure enthält oder durch dieses Molekül gebildet ist.

4. Farbakzeptor nach Anspruch 2, **dadurch gekennzeichnet, dass** der Farbakzeptor ein Molekül aus einem zentralen Zitronensäuremolekül und drei Oligomeren der Polymilchsäure enthält oder durch dieses Molekül gebildet ist.

5. Wärmeempfindliches Aufzeichnungsmaterial mit einem Substrat und einer wärmeempfindlichen Aufzeichnungsschicht, wobei die wärmeempfindliche Aufzeichnungsschicht mindestens einem Farbstoffvorläufer und mindestens einem Farbakzeptor enthält, welche unter Einwirkung von Wärme farbbildend miteinander reagieren, **dadurch gekennzeichnet, dass** der Farbakzeptor ein Molekül aus einer n-wertigen Säure und aus n-fach um diese Säure gruppierte Oligomere der Polymilchsäure
enthält oder durch dieses Molekül gebildet ist.

6. Wärmeempfindliches Aufzeichnungsmaterial nach Anspruch 5, **dadurch gekennzeichnet, dass** die wärmeempfindliche Aufzeichnungsschicht mindestens einen Farbstoffvorläufer und eine Kombination enthält
- aus mindestens einem ersten Farbakzeptor, enthaltend ein Molekül oder gebildet aus einem Molekül aus
einer n-wertigen Säure und aus n-fach um diese Säure gruppierte Oligomere der Polymilchsäure
- und aus mindestens einem zweiten Farbakzeptor, enthaltend ein Molekül oder gebildet aus einem Molekül aus
einer m-wertigen Säure und aus m-fach um diese Säure gruppierte Oligomere der Polymilchsäure
mit der Bedingung m ≠ n.

7. Wärmeempfindliches Aufzeichnungsmaterial nach einem der Anspruch 5 bis 6, **dadurch gekennzeichnet, dass** die wärmeempfindliche Aufzeichnungsschicht ausschließlich Farbakzeptoren aufweist, die ein Molekül aus einer n-wertigen Säure und aus n-fach um diese Säure gruppierte Oligomere der Polymilchsäure
enthalten oder durch dieses Molekül gebildet sind.

8. Wärmeempfindliches Aufzeichnungsmaterial nach einem der Patentansprüche 5 bis 7, **dadurch gekennzeichnet, dass** die wärmeempfindliche Aufzeichnungsschicht als Farbstoffvorläufer mindestens eine Substanz aufweist, die ausgesucht ist aus der Liste, umfassend: 3-diethylamino-6-methyl-7-Anilinofluoran, 3-dibutylamino-6-methyl-7-Anilinofluoran, 3-(N-methyl-N-propyl)amino-6-methyl-7-Anilinofluoran, 3-(N-ethyl-N-isoamyl)amino-6-methyl-7-Anilinofluoran, 3-(N-methyl-N-cyclohexyl)amino-6-methyl-7-Anilinofluoran, 3-(N-ethyl-N-tolyl)amino-6-methyl-7-Anilinofluoran und 3-(N-ethyl-N-tetrahydrofuryl)amino-6-methyl-7-Anilinofluoran.

9. Wärmeempfindliches Aufzeichnungsmaterial nach einem der Patentansprüche 5 bis 8, **dadurch gekennzeichnet, dass** die wärmeempfindliche Aufzeichnungsschicht als Bindemittel eine Substanz enthält, ausgesucht aus die Liste, umfassend: Polyvinylalkohol, Ethylen-Vinylalkohol-Coplymer oder eine Kombination aus Polyvinylalkohol und Ethylen-Vinylalkohol-Coplymer.

10. Wärmeempfindliches Aufzeichnungsmaterial nach einem der Patentansprüche 5 bis 9, **dadurch gekennzeichnet, dass** das Aufzeichnungsmaterial ferner eine pigmenthaltige Zwischenschicht aufweist, welche zwischen Substrat und wärmeempfindlicher Aufzeichnungsschicht angeordnet ist.

## Claims

1. Colour acceptor for chemical reaction with a dye precursor to form a visually recognisable colour, **characterised in that** the colour acceptor contains oligomers of polylactic acid or is formed by such oligomers.

2. Colour acceptor according to claim 1, **characterised in that** the colour acceptor contains a molecule composed of
an n-valent acid and oligomers of polylactic acid grouped n-fold around that acid
or is formed by such a molecule.

3. Colour acceptor according to claim 2, **characterised in that** the colour acceptor contains a molecule composed of a central oxalic acid molecule and two oligomers of polylactic acid or is formed by such a molecule.

4. Colour acceptor according to claim 2, **characterised in that** the colour acceptor contains a molecule composed of a central citric acid molecule and three oligomers of polylactic acid or is formed by such a molecule.

5. Heat-sensitive recording material having a substrate and a heat-sensitive recording layer, wherein the heat-sensitive recording layer contains at least one dye precursor and at least one colour acceptor which react with one another under the action of heat to form a colour, **characterised in that** the colour acceptor contains a molecule composed of
an n-valent acid and oligomers of polylactic acid grouped n-fold around that acid
or is formed by such a molecule.

6. Heat-sensitive recording material according to claim 5, **characterised in that** the heat-sensitive recording layer contains at least one dye precursor and a combination of
- at least one first colour acceptor, containing a molecule or formed from a molecule composed of
an n-valent acid and oligomers of polylactic acid grouped n-fold around that acid,
- and at least one second colour acceptor, containing a molecule or formed from a molecule composed of
an m-valent acid and oligomers of polylactic acid grouped m-fold around that acid,
with the proviso that m ≠ n.

7. Heat-sensitive recording material according to either one of claims 5 and 6, **characterised in that** the heat-sensitive recording layer has exclusively colour acceptors that contain a molecule composed of
an n-valent acid and oligomers of polylactic acid grouped n-fold around that acid
or are formed by such a molecule.

8. Heat-sensitive recording material according to any one of patent claims 5 to 7, **characterised in that** the heat-sensitive recording layer has as dye precursor at least one substance selected from the list comprising: 3-diethylamino-6-methyl-7-anilinofluoran, 3-dibutylamino-6-methyl-7-anilinofluoran, 3-(N-methyl-N-propyl)amino-6-methyl-7-anilinofluoran, 3-(N-ethyl-N-isoamyl)amino-6-methyl-7-anilinofluoran, 3-(N-methyl-N-cyclohexyl)amino-6-methyl-7-anilinofluoran, 3-(N-ethyl-N-tolyl)amino-6-methyl-7-anilinofluoran and 3-(N-ethyl-N-tetrahydrofuryl)amino-6-methyl-7-anilinofluoran.

9. Heat-sensitive recording material according to any one of patent claims 5 to 8, **characterised in that** the heat-sensitive recording layer contains as binder a substance selected from the list comprising: polyvinyl alcohol, ethylene-vinyl alcohol copolymer or a combination of polyvinyl alcohol and ethylene-vinyl alcohol copolymer.

10. Heat-sensitive recording material according to any one of patent claims 5 to 9, **characterised in that** the recording material also has a pigment-containing intermediate layer which is arranged between the substrate and the heat-sensitive recording layer.

## Revendications

1. Accepteur de couleur pour la réaction chimique avec un précurseur de colorant, avec formation d'une couleur visuellement reconnaissable, **caractérisé en ce que** l'accepteur de couleur contient des oligomères du poly(acide lactique) ou en est constitué.

2. Accepteur de couleur selon la revendication 1, **caractérisé en ce que** l'accepteur de couleur contient une molécule d'un acide à valence n et d'oligomères du poly(acide lactique) n-fois groupés autour de cet acide, ou est constitué de cette molécule.

3. Accepteur de couleur selon la revendication 2, **caractérisé en ce que** l'accepteur de couleur contient une molécule constituée d'une molécule centrale d'acide oxalique et de deux oligomères du poly(acide lactique), ou est constitué de cette molécule.

4. Accepteur de couleur selon la revendication 2, **caractérisé en ce que** l'accepteur de couleur contient une molécule constituée d'une molécule centrale d'acide citrique et de trois oligomères du poly(acide lactique), ou est constitué de cette molécule.

5. Matériau d'enregistrement thermosensible comportant un substrat et une couche d'enregistrement thermosensible, la couche d'enregistrement thermosensible contenant au moins un précurseur de colorant et au moins un accepteur de couleur, qui réagissent l'un avec l'autre avec formation d'une couleur sous l'effet de la chaleur, **caractérisé en ce que** l'accepteur de couleur contient une molécule constituée d'un acide à valence n et d'oligomères du poly(acide lactique) n-fois groupés autour de cet acide, ou est constitué de cette molécule.

6. Matériau d'enregistrement thermosensible selon la revendication 5, **caractérisé en ce que** la couche d'enregistrement thermosensible contient au moins un précurseur de colorant et une combinaison
- d'au moins un premier accepteur de couleur, contenant une molécule ou constitué d'une molécule constituée d'un acide à valence n et d'oligomères du poly(acide lactique) n-fois groupés autour de cet acide,
- et d'au moins un deuxième accepteur de couleur, contenant une molécule ou constitué d'une molécule constituée d'un acide à valence m et d'oligomères du poly(acide lactique) groupés m fois autour de cet acide
à la condition que m ≠ n.

7. Matériau d'enregistrement thermosensible selon l'une des revendications 5 à 6, **caractérisé en ce que** la couche d'enregistrement thermosensible comprend exclusivement des accepteurs de couleur qui contiennent une molécule constituée d'un acide à valence n et d'oligomères du poly(acide lactique) n-fois groupés autour de cet acide, ou sont constitués de cette molécule.

8. Matériau d'enregistrement thermosensible selon l'une des revendications 5 à 7, **caractérisé en ce que** la couche d'enregistrement thermosensible comprend en tant que précurseur de colorant au moins une substance qui est choisie dans la liste comprenant le 3-diéthylamino-6-méthyl-7-anilinofluoranne, le 3-dibutylamino-6-méthyl-7-anilinofluoranne, le 3-(N-méthyl-N-propyl)amino-6-méthyl-7-anilinofluoranne, le 3-(N-éthyl-N-isoamyl)amino-6-méthyl-7-anilinofluoranne, le 3-(N-méthyl-N-cyclohexyl)amino-6-méthyl-7-anilinofluoranne, le 3-(N-éthyl-N-tolyl)amino-6-méthyl-7-anilinofluoranne et le 3-(N-éthyl-N-tétrahydrofuryl)amino-6-méthyl-7-anilinofluoranne.

9. Matériau d'enregistrement thermosensible selon l'une des revendications 5 à 8, **caractérisé en ce que** la couche d'enregistrement thermosensible contient en tant que liant une substance choisie dans la liste comprenant le poly(alcool vinylique), un copolymère éthylène-alcool vinylique, ou une combinaison de poly(alcool vinylique) et d'un copolymère éthylène-alcool vinylique.

10. Matériau d'enregistrement thermosensible selon l'une des revendications 5 à 9, **caractérisé en ce que** le matériau d'enregistrement comprend en outre une couche intermédiaire contenant un pigment, qui est disposée entre le substrat et la couche d'enregistrement thermosensible.
